Europäisches Patentamt

European Patent Office

Office européen des brevets

(19)

(11) **EP 0 715 449 B1**

(12) **FASCICULE DE BREVET EUROPEEN**

(45) Date de publication et mention
de la délivrance du brevet:
**09.02.2000 Bulletin 2000/06**

(51) Int Cl.⁷: **H04N 1/40**, H04N 1/00,
H04N 1/19

(21) Numéro de dépôt: **95402710.8**

(22) Date de dépôt: **30.11.1995**

(54) **Balayeur d'images sur original utilisant la correction de gamma individuelle et l'uniformisation de la sensibilité des éléments de lecture**

Bilddokumentabtaster mit individueller Gamma-Korrektur und Empfindlichkeitsausgleich der Sensorelemente

Document image scanner with individual gamma correction and uniformity correction of the sensitivity of the image sensing elements

(84) Etats contractants désignés:
**AT BE CH DE ES FR GB IT LI NL SE**

(30) Priorité: **02.12.1994 FR 9414535**

(43) Date de publication de la demande:
**05.06.1996 Bulletin 1996/23**

(73) Titulaires:
• **Gatto, Jean-Marie**
**London SW1X 9PP (GB)**
• **Bertrand, Dominique**
**Morley 6062 WA (AU)**

(72) Inventeurs:
• **Bertrand, Dominique**
**F-75017 Paris (FR)**
• **Gatto, Jean-Marie**
**F-75116 Paris (FR)**

(74) Mandataire: **Dubois-Chabert, Guy et al**
**Société de Protection des Inventions**
**3, rue du Docteur Lancereaux**
**75008 Paris (FR)**

(56) Documents cités:
**EP-A- 0 297 559          EP-A- 0 398 268**
**EP-A- 0 484 900          EP-A- 0 532 796**
**US-A- 4 975 787          US-A- 5 136 665**

• **PATENT ABSTRACTS OF JAPAN vol. 18 no. 390 (E-1582) ,21 Juillet 1994 & JP-A-06 113091 (TOSHIBA CORP) 22 Avril 1994,**
• **PATENT ABSTRACTS OF JAPAN vol. 17 no. 85 (E-1322) ,19 Février 1993 & JP-A-04 280568 (TOKYO ELECTRIC CO LTD) 6 Octobre 1992,**

**EP 0 715 449 B1**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

Domaine technique

La présente invention concerne un dispositif de lecture à balayage ou scanner de tout type de document et le procédé de mise en oeuvre dudit scanner.

Etat de la technique antérieure

Le scanner dont il est question dans la présente invention est un appareil qui a pour but de lire des documents par un balayage important de lignes, elles mêmes constituées d'un nombre important de points sensibles à la lumière, lesdits éléments de points produisant des signaux appelés signaux "pixels", ledit document étant entraîné pour défiler devant le balayage. Chaque élément d'un capteur détecte de la lumière reçue par une petite surface élémentaire.

Le résultat obtenu est une image numérisée, représentée par une matrice de ces pixels dont la dimension est égale au nombre de lignes multipliées par le nombre de pixels par ligne.

Chaque pixel est défini, en monochrome par une valeur numérisées unique, en couleur par trois valeurs associées à chacune des trois couleurs fondamentales choisies.

Avant l'invention la réalisation d'un scanner se heurte habituellement à deux inconvénients ou défauts majeurs qui sont inconciliables:

-  soit une vitesse de lecture de document élevée, mais alors la linéarité de luminosité individuelle et/ou globale des éléments est très faible : La performance élevée au niveau de la vitesse de traitement permettant d'accroître le nombre de documents traités pendant un intervalle de temps donné, mais par contre la qualité est non satisfaisante quant au rendu des images acquises, le système étant poussé au delà des limites normales de fonctionnement ;
-  soit, si on cherche à obtenir une linéarité de luminosité correcte voire élevée des pixels, il faut alors ralentir la vitesse de lecture du scanner et des capteurs associés et ce scanner serait alors beaucoup plus lent et ne permet plus le traitement d'un nombre important de documents de manière performante, ce qui le rend insatisfaisant pour l'utilisateur.

Ainsi, un scanner avant l'invention doit obéir au compromis de l'un ou l'autre de ces deux critères. Les utilisateurs se trouvent alors en présence de scanners ne satisfaisant pas leurs besoins, lesdits besoins étant définis comme étant la possibilité d'utiliser un scanner qui permette un traitement rapide de documents, associé à un rendu des images acquises qui soit de qualité, ledit scanner devant, en outre, être d'un coût peu élevé.

Par ailleurs une amélioration classique, avant l'invention, des scanners existant, visant à accroître la qualité de ces deux propriétés, conduirait à un produit de coût prohibitif, et qui par conséquent ne pourrait pas satisfaire non plus aux besoins des utilisateurs.

L'objet de la présente invention est d'assurer la gestion complète d'un scanner, avec ses capteurs associés, tout en palliant ces inconvénients. Le dispositif de traitement améliore de façon considérable les caractéristiques, dans la mesure où il permet une vitesse de lecture de document très élevée, tout en offrant le traitement de l'image numérisée du document en temps réel d'excellente linéarité lumineuse. L'ensemble réalisé est ainsi de fabrication aisée, fiable, reproductible aisément car numérique (plus d'intervention manuelle, tests automatiques) et donc pas cher.

Un autre objet de l'invention est de permettre, par l'intermédiaire de ce dispositif de traitement, d'interfacer ledit scanner avec une unité centrale ainsi qu'avec d'autres unités périphériques telles : une imprimante, un écran LCD (affichage à cristaux liquides) ou autre, un clavier à touches ou dalle tactile, de la mémoire de type flash ou autre, un lecteur de carte magnétique, un lecteur code optique, un lecteur carte à puce, etc...

L'abrégé japonais JP-A-06 113 091 concerne un dispositif de stockage et de formation d'image. Dans ce dispositif des signaux de contrôle et des signaux de données sont échangés entre une partie de contrôle et des dispositifs respectifs par un bus système. Les données image sont envoyées à vitesse élevée à partir des dispositifs respectifs par un bus image. Les données d'image arrivant d'un scanner au moment d'une opération en temps réel sont traitées et un traitement d'amplification/réduction est réalisé dans une partie de traitement d'image. L'opération de sortie vers une imprimante laser à une interface imprimante est réalisée en parallèle et les dispositifs sur le bus inutiles pour l'opération de traitement sont passés.

La demande de brevet EP-A-0 398 268 décrit un dispositif imprimante vidéo qui est capable d'imprimer une image fixe de haute qualité en soumettant les données image obtenues d'un signal vidéo continu tel qu'un signal télévision à un traitement du bruit et du son pour améliorer la qualité du signal. Pendant cette opération de traitement, une image traitée peut être affichée sur l'écran d'un moniteur, vérifiée et corrigée sur cet écran en temps réel.

Le brevet US-A-5 136 665 décrit un appareil de lecture constitué de deux parties.

La demande de brevet EP-A-0 297 559 décrit un photocapteur image qui comprend une unité photocapteur comprenant plusieurs éléments photosensibles, une unité de stockage de charge et une unité de commutation. Dans un mode de réalisation un document est déplacé grâce à un rouleau en rotation autour d'un axe dans une direction donnée. Un lecteur comprend un ressort lame disposé pour plaquer élastiquement le document contre le rouleau sur toute la largeur de celui-ci. Un réseau de diodes permet d'éclairer le document. Un système optique, formé de fibres optiques focalisantes, permet de focaliser la lumière réfléchie par le document vers un transducteur comportant un photocapteur pour convertir photoélectriquement la lumière focalisée. Un élément permet de solidariser entre eux tous ces éléments.

Une table de conversion est préparée pour établir l'uniformité de sensibilité entre les éléments du photocapteur. A la lecture, les données d'image sont corrigées en utilisant cette table. De plus une correction de gamma est appliquée à l'ensemble des données.

L'abrégé japonais JP-A-04 280 568 décrit un dispositif de lecture dans lequel une plaque de protection transparente applique un document à lire contre un capteur de lecture.

Exposé de l'invention

L'invention est telle que définie dans les revendications 1 et 14.

L'invention propose donc un scanner réalisé à partir d'éléments photosensibles de type classique, comportant au moins un dispositif de traitement qui permet de gérer intégralement le scanner avec ses capteurs photosensibles et d'illumination et d'entraînement associés et, en particulier, d'effectuer en temps réel tout traitement numérique sur l'image en cours d'acquisition composée d'un ensemble de points appelés pixels.

La présente invention grâce à un dispositif de traitement numérique pour la gestion d'un tel scanner, permet en particulier d'avoir pour résultat des propriétés qui seraient normalement celles d'un scanner beaucoup plus performant, tant pour ce qui est de la vitesse que sa finesse de résolution et de prix sans comparaison plus élevé.

Elle a pour but de pouvoir s'appliquer à des capteurs de qualité médiocre, et de les rendre de haute qualité, permettant ainsi une réalisation aisée, simple, performante et peu coûteuse, d'un scanner, et d'obtenir par conséquent un scanner qui, lorsqu'il est muni d'un tel dispositif, présente une vitesse de traitement élevée, en temps réel, tout en ayant également une linéarité excellente. Les performances de vitesse peuvent par exemple dépasser d'un rapport 10 les performances normales d'un capteur standard avant l'invention.

"Temps réel" signifie que le traitement est concomitant à la lecture des pixels.

La fiabilité à long terme et la précision du scanner réalisé selon l'invention sont garanties grâce à l'utilisation de procédés numériques.

A cet effet, le scanner ainsi réalisé est caractérisé en ce qu'il est muni d'un dispositif comportant au moins des moyens d'acquisition et de traitement qui lui permettent d'effectuer toutes les opérations en temps réel nécessaires au traitement puis au stockage des images acquises, formées à partir des pixels en provenance d'un capteur.

Selon une forme de réalisation de l'invention, ledit scanner est caractérisé en ce que ce dispositif comprend des moyens de traitement individuels et/ou par groupe de pixels permettant de linéariser soit un pixel, soit un groupe de pixels, c'est-à-dire traiter un pixel par rapport à des pixels environnants. Les pixels ainsi traités sont stockés dans une mémoire tampon dont la capacité peut atteindre depuis une fraction de ligne jusqu'à une grande quantité de lignes ainsi scannées.

Avantageusement, selon une première caractéristique du scanner muni d'un dispositif de traitement selon l'invention, ledit moyen d'acquisition des images des pixels est un convertisseur analogique/numérique. Ce convertisseur peut être de type flash ou non, et sa dynamique peut s'étendre de un bit à vingt quatre bits. A titre d'exemple le scanner ici réalisé comporte un convertisseur analogique/numérique de type "sub-ranging" (CAN) huit bits.

Le présent dispositif ne concerne pas le convertisseur mais toute la chaîne de traitement entre la sortie du convertisseur et une unité centrale, ou autre, à laquelle sont communiqués lesdits pixels traités.

Le scanner ainsi conçu permet de pratiquer l'étalonnage de chaque élément.

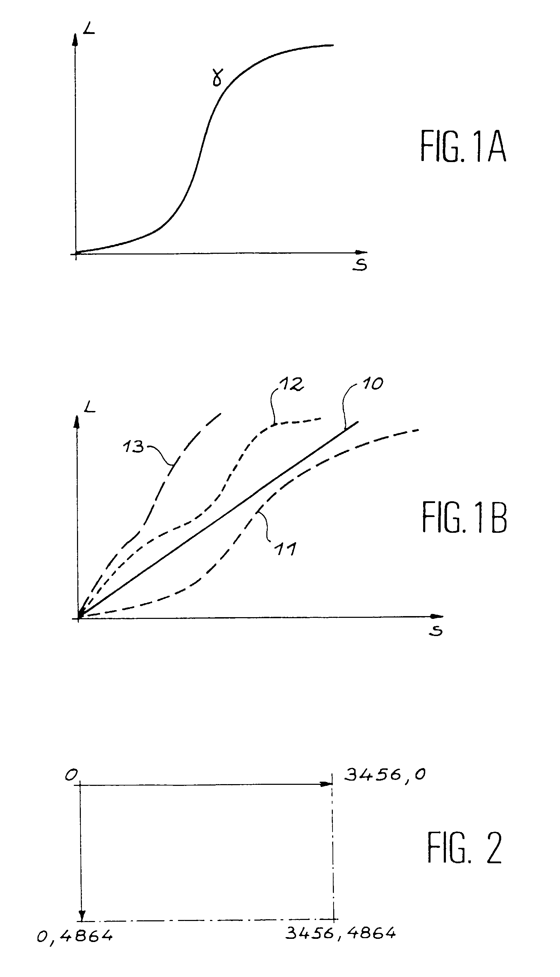

Pour ce faire, les éléments du capteur considéré sont soumis un à un, au calcul de leur courbe de réponse. Les courbes obtenues représentent la sensibilité en fonction du niveau de lumière reçue. Ces courbes sont couramment appelées "gamma" ; elles sont rarement linéaires. Un exemple de courbe de gamma est représenté sur la figure 1A.

Une fois la linéarisation de chaque élément réalisée, selon une méthode qui sera décrite ultérieurement, les valeurs des coefficients de linéarisation de chaque courbe associée à chaque élément, sont stockées dans une table qui peut être constituée d'une mémoire tampon, située conjointement au dispositif de traitement.

On constate, généralement, que la luminosité est différente pour chaque élément. Il convient donc, de plus, afin d'obtenir un scanner de bonne linéarité, de soumettre ces courbes individuelles des éléments à une opération d'uniformisation de l'ensemble du capteur, pour que tous les éléments du capteur possèdent exactement la même courbe de sensibilité, et/ou le même gamma.

L'ensemble : procédés d'étalonnage décrits ci-dessus, ainsi que le fonctionnement du scanner, est rendu possible par l'invention, notamment grâce à l'association d'au moins un multiplieur, et/ou au moins un sommateur, et/ou au moins un multiplexeur.

Pour ce faire, ces moyens calculent lesdits coefficients, et stockent les résultats dans une mémoire tampon. Ces résultats après traitement permettent de déterminer les coefficients qui devront être mis en oeuvre pour obtenir la linéarisation voulue, ceci dans une première phase pour chaque élément, puis dans une deuxième phase à l'ensemble des éléments du capteur.

Les moyens utilisés sont par exemple les méthodes adaptatives, notamment les moindres carrés. Ces méthodes permettent d'obtenir les coefficients des courbes de gamma, ces courbes étant non linéaires. Le dispositif selon l'invention permet de façon avantageuse de traiter des courbes non linéaires à plusieurs coefficients.

Il faut noter que grâce auxdits moyens mis en oeuvre, il est maintenant possible d'appliquer quasiment tout type d'équation mathématique, linéaire ou non linéaire à la courbe de réponse d'un ou de tous les pixels. La courbe de réponse lumineuse d'un élément du capteur est donnée sur la figure 1B, pour un pixel typique : le 10 étant idéal et 11, 12, 13 étant des exemples classiques.

Tous autres procédés mathématiques peuvent être appliqués grâce au dispositif de l'invention : par exemple dérivateur, intégrateur de tous ordres et de toutes sortes.

Une fois, l'opération de linéarisation menée à bien tant individuellement que globalement pour tout le capteur, chaque coefficient calculé est stocké dans une mémoire tampon.

Il faut noter que la mémoire tampon utilisée dans l'invention n'est pas un registre FIFO (premier entré, premier sorti), mais une mémoire classique de type RAM (mémoire à accès aléatoire) permettant une diminution conséquente du coût.

Les coefficients de linéarisation de gamma des éléments sont mixés avec les coefficients d'uniformisation du capteur. On obtient ainsi un nombre de coefficients par élément inchangé. Ceci réduit la taille de la mémoire tampon des coefficients. Les calculs nécessaires à la combinaison de ces coefficients peuvent être exécutés par l'unité centrale et/ou conjointement par l'unité centrale et le dispositif selon l'invention.

Une fois, ces opérations de linéarisation, d'uniformisation, et/ou par exemple de correction du capteur effectuées pour tous les éléments, il est également possible selon le dispositif réalisé de l'invention, de traiter simultanément l'image en cours d'acquisition de toutes les manières voulues, par exemple : la netteté, le flou, filtrage de bruit, et tout autre traitement....

Dans un exemple réalisé selon l'invention il est possible de traiter spécifiquement les images constituées de pixels. Pour ce faire est utilisée entre autres la méthode de Taylor. La propriété de la matrice de Taylor est d'augmenter les petites différences de variations de lumière des pixels, donc les détails.

Il existe en effet une relation entre chaque pixel d'une même image. Cette relation peut être modifiée mathématiquement par un traitement matriciel ou autre.

Une image, représentée par une série de points d'intensité lumineuse variable peut être interprétée par exemple comme une matrice à deux dimensions, tel que représenté sur la figure 2.

Dans l'exemple, chaque élément de cette matrice possède une valeur variant de 0 à 255.

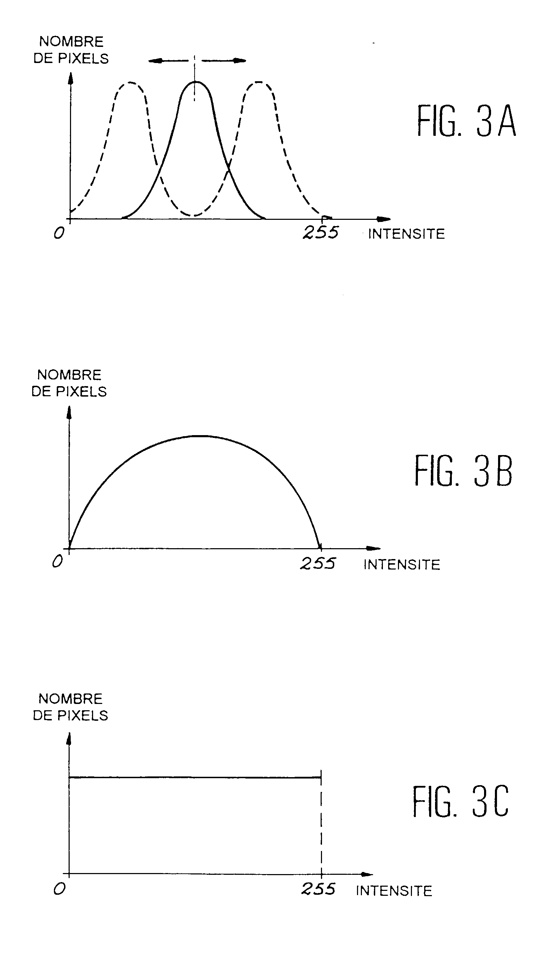

On peut grâce au dispositif selon l'invention tracer l'histogramme des valeurs de tous les pixels, comme représenté sur les figures 3A, 3B, 3C, pour respectivement: peu de contraste, beaucoup de contraste, une image de bruit (on trouve alors une répartition égale de pixels pour chaque intensité).

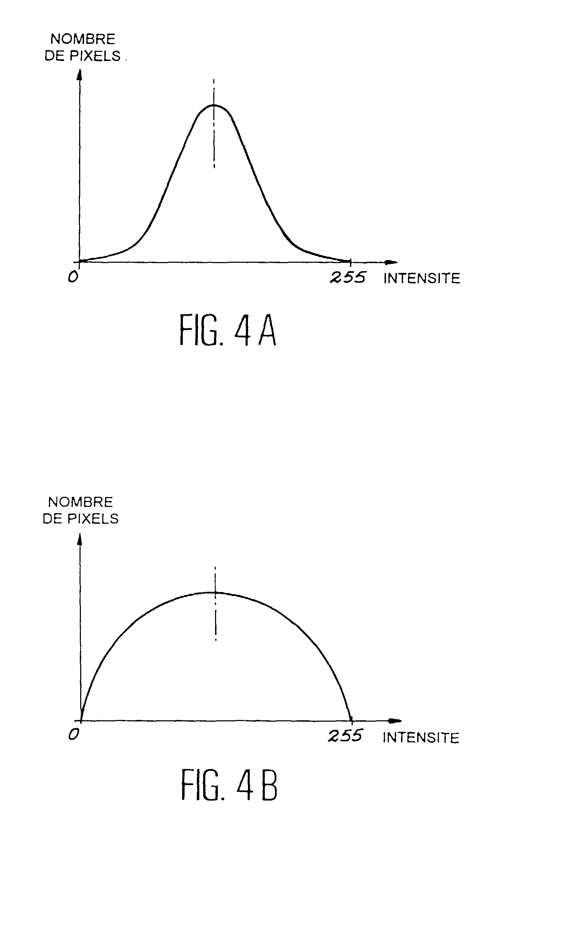

Grâce au dispositif selon l'invention on peut augmenter ou diminuer le contraste. Ainsi par exemple, la courbe représentée sur la figure 4B correspond à une augmentation du contraste de la courbe représentée à la figure 4A ; en prenant par exemple le maximum de la courbe de la figure 4A et en le dilatant de part et d'autre par un ou des coefficients adéquats, ces coefficients n'étant pas nécessairement linéaires et/ou symétriques.

Dans un autre exemple on considère la convolution appliquée grâce à l'invention.

On utilise alors les pixels voisins pour calculer la valeur du nouveau pixel.

Pour ce faire on utilise une matrice contenant les valeurs nécessaires appelées "kernel" ou noyau. Ce noyau est de préférence d'ordre impair, par exemple un noyau d'ordre 3 x 3 :

Pour améliorer la netteté on peut utiliser par exemple un noyau de type Laplacien.

Le rôle des noyaux Laplaciens est d'améliorer la netteté de l'image en détectant les changements de variations entre pixels voisins (appelés contours) d'une image, puis de les ajouter à l'image originale.

Par exemple un noyau de Laplace à 3 x 3 dimensions est:

| -1 | -1 | -1 |
|----|----|----|
| -1 | 8  | -1 |
| -1 | -1 | -1 |

On remarque que pour l'exemple la valeur centrale est de 8 et la somme du noyau est zéro. Ceci fait que toute représentation de peu de variation de contours n'est que peu affectée.

Par contre ce noyau va améliorer considérablement les contours d'objets situés à l'intérieur d'une image. Dans le cas du Laplacien cette augmentation a lieu dans toutes les directions.

Dans une réalisation selon l'invention les algorithmes mathématiques suivant sont appliqués.

Soit la matrice de pixels

$$\begin{bmatrix} P_{11} & P_{12} & P_{13} \\ P_{21} & P_{22} & P_{23} \\ P_{31} & P_{32} & P_{33} \end{bmatrix}$$

et le noyau de Laplace

$$\begin{bmatrix} -K & -K & -K \\ -K & (K \times 8)+1 & -K \\ -K & -K & -K \end{bmatrix}$$

La formule appliquée est :

$$P_{22} = ((Kx8)+1)P_{22} - K(P_{11} + P_{21} + P_{31} + P_{12} + P_{32} + P_{13} + P_{23} + P_{33})$$

Tous autres coefficients du noyau peuvent être appliqués, faisant varier l'effet voulu sur le traitement de l'image.

Selon une caractéristique de l'invention on peut transformer une relation d'une matrice à n dimensions en n relations de matrice à une dimension.

On peut ainsi par exemple utiliser un noyau à une dimension par exemple horizontale, puis un autre noyau à une autre dimension par exemple verticale, puis appliquer successivement deux traitements à l'image.

De tout ce qui vient d'être énoncé, tous types de traitements spécifiques peuvent être appliqués à l'image.

Exemples de traitements spécifiques :

- augmentation ou diminution de contraste ;
- augmentation ou diminution de luminosité ;
- filtrage de bruit ;
- valeur moyenne ;
- médiane ;
- flou ;
- flou de mouvement ;
- .......

Pour plus de compréhension on va décrire maintenant le fonctionnement du dispositif qui permet d'effectuer les opérations mathématiques qui viennent d'être définies.

De manière avantageuse, une autre caractéristique de l'invention fait que le système est à plusieurs passes par pixel ou par groupe de pixels, et est conçu de façon à traiter les pixels en temps réel. Lesdits moyens de traitement des pixels acquis utilisent alors la relation mathématique modélisée, en injectant successivement pour un même pixel dans le multiplieur les différents coefficients nécessaires, grâce aux multiplexeurs. Le dispositif est capable d'effectuer plusieurs opérations nécessaires sur chaque pixel ou groupe de pixels au fur et à mesure que les pixels sont acquis, donc en temps réel.

Selon une autre caractéristique de l'invention, la relation qui régit l'interaction des pixels environnants sur un pixel central fait intervenir une matrice à deux dimensions comme évoqué plus haut. Le nombre de calculs à effectuer est alors soit souvent très grand en fonction du nombre choisi de pixels à traiter. En effet ce nombre dépend du nombre de pixels adjacents dont on souhaite tenir compte pour le traitement de l'image d'un seul pixel.

Selon le procédé de l'invention, pour remédier à cet inconvénient, cette matrice est transformée en deux relations d'une matrice à une dimension, permettant de diminuer la taille de la mémoire tampon.

Pour ce faire, le dispositif de traitement décrit dans l'invention traite par exemple alors la première dimension de la matrice de cette relation : par exemple horizontalement sur les pixels d'une même ligne.

L'unité centrale quant à elle, peut traiter par exemple la deuxième dimension de cette relation par exemple verticale, pendant le laps de temps où elle inactive. L'unité centrale, en effet, ne fait qu'effectuer le stockage des images qui lui sont envoyées par le dispositif d'acquisition et de traitement selon l'invention . Le laps de temps libre de l'unité centrale est grand car le stockage des images est effectué de façon rapide ; on décrira en effet plus loin que selon une autre caractéristique de l'invention, le transfert vers l'unité centrale s'effectue directement mémoire à mémoire via le bus, et ne consomme ainsi que très peu de temps du processeur central ainsi libéré.

Ainsi, avantageusement, on a réduit le nombre des opérations (à une somme H + V et non un produit H.V, soit si la matrice est de dimension n : n + n au lieu de $n^2$) auxquelles les pixels sont soumis, permettant un gain de temps considérable, temps qui selon l'invention, va être utilisé :

- soit pour traiter plus de pixels ;
- soit pour utiliser une technologie moins coûteuse et plus lente.

A titre d'exemple on explique ici la réduction du nombre d'opérations à effectuer.

Si l'on prend un traitement applicable sur une matrice 3 x 3, le nombre d'opérations à effectuer est de neuf, alors que grâce au dispositif cité il est réduit à 3 + 3 soit six. Le gain en opérations étant de : neuf moins six soit trois.

Si l'on prend un traitement applicable sur une matrice 7 x 7, le nombre d'opérations à effectuer est de quarante neuf, alors que grâce au dispositif cité il est réduit à 7+7 soit quatorze. Le gain en opérations étant de : quarante neuf moins quatorze soit trente cinq.

Dans le dispositif décrit selon l'invention il est possible d'effectuer une opération par cycle d'horloge de L'ASIC (circuit intégré pour application spécifique). On voit qu'il est alors possible d'effectuer, a titre d'exemple, d'autant plus d'opérations que la fréquence d'horloge est un multiple plus élevé que la fréquence d'acquisition des pixels.

Si l'on veut par exemple effectuer des opérations sur sept pixels, il suffit de choisir la technologie de l'ASIC permettant de réaliser le dispositif selon l'invention, pour que ce composant puisse travailler sept fois plus vite que la vitesse d'acquisition des pixels.

Or ceci est très facilement réalisable avec les technologies disponibles.

En effet, toute réduction d'un nombre d'opérations fait gagner du temps, donc du matériel équivalent, ou bien ce gain d'opération permet de faire plus de traitements donc d'être plus compétitifs tout en restant dans une gamme de coût peu élevée.

Selon l'invention les moyens de traitement de l'image des pixels comprennent au moins un multiplieur et/ou au moins un sommateur, et/ou au moins un multiplexeur, ainsi qu'au moins une mémoire tampon renfermant les jeux des coefficients décrits plus haut.

Avantageusement selon l'invention, il est aussi possible après avoir calculé les coefficients de linéarisation et/ou de correction de chaque pixel, de les mixer avec les coefficients de la phase de traitement spécifique des pixels. On réduit donc ainsi le nombre d'opérations sur les pixels.

Les images, ainsi acquises et traitées par le dispositif associé à son capteur, sont stockées dans la mémoire tampon. Quand la mémoire tampon contient une fraction ou une ligne traitée, cette ligne est envoyée à l'unité centrale, en vue de stocker l'image constituée de plusieurs lignes. Comme déjà cité plus haut, le temps de transfert vers l'unité centrale est très largement inférieur au temps d'acquisition d'une ligne, ce qui permet à l'unité centrale d'effectuer tous types d'opération dans le temps restant, sur l'image qu'elle a stockée.

Selon une variante, le dispositif de traitement de l'invention peut être intégrée dans un scanner de type classique, lui permettant une amélioration considérable, de gain de temps et de linéarité sur la lecture des images, de place, le tout pour un coût modique.

Selon une variante, le dispositif de traitement de l'invention peut être intégré, ou conjoint au capteur.

Selon une autre caractéristique, le dispositif complet de l'invention est réalisé à l'aide d'au moins un composant dit communément ASIC pour "Application Specific Integrated Circuit" ou en français : Circuit intégré pour application spécifique.

Cet ASIC est placé par exemple sur une carte de circuit imprimé pouvant se connecter à une unité centrale comme par exemple un ordinateur de type PC (marque déposée) ou compatible, mais aussi tout autre type d'ordinateur, micro, mini, hôte, quel qu'il soit.

La carte de traitement du scanner ainsi réalisée selon l'invention permet aussi d'interfacer ledit scanner avec une unité centrale mais aussi avec des unités périphériques telles que au moins un écran LCD ou non, et/ou au moins une imprimante thermique ou à jet d'encre ou autre, et/ou une mémoire flash, et/ou au moins une mémoire non volatile de type statique ou pseudostatique, et/ou au moins une mémoire de type RAM dynamique, et/ou au moins un lecteur optique, et/ou au moins un lecteur magnétique, et/ou au moins une surface tactile, et/ou au moins un lecteur de puce, et/ou au moins un GPIO (entrées/sorties à usage général), etc...

De même, cette carte de traitement du scanner selon l'invention permet également de gérer lesdites unités périphériques.

Selon un autre mode de réalisation la partie de l'invention de traitement du capteur est placée de façon conjointe au capteur soit dans le même boîtier que le capteur, soit sur un petit circuit imprimé relié directement à proximité du capteur.

Le scanner selon l'invention peut être appliqué à tout type d'utilisation qui nécessite la lecture d'un document papier, photographique, radiologique, de chèque, de bulletin de saisie, etc... pour pouvoir ensuite le stocker et l'analyser par le biais de logiciels de traitement spécifiques chargés par exemple dans la mémoire d'une unité centrale à laquelle le scanner est relié, Les résultats du traitement peuvent ensuite être envoyé vers un site central de collecte d'informations. Par exemple ledit scanner peut permettre la lecture et l'analyse de billets de banque et vérifier leur authenticité : il peut aussi servir à interpréter, après lecture rapide et fiable, tout type de bulletin de saisie.

Brève description des dessins

- Les figures 1A à 4B illustrent les courbes obtenues avant et/ou après traitement mathématique selon l'invention ;
- les figures 5 à 7 illustrent la structure mécanique du scanner selon l'invention ;
- les figures 8 et 9 représentent plusieurs blocs diagrammes illustrant le dispositif de traitement des pixels et des périphériques du scanner selon l'invention.

Exposé détaillé de modes de réalisation

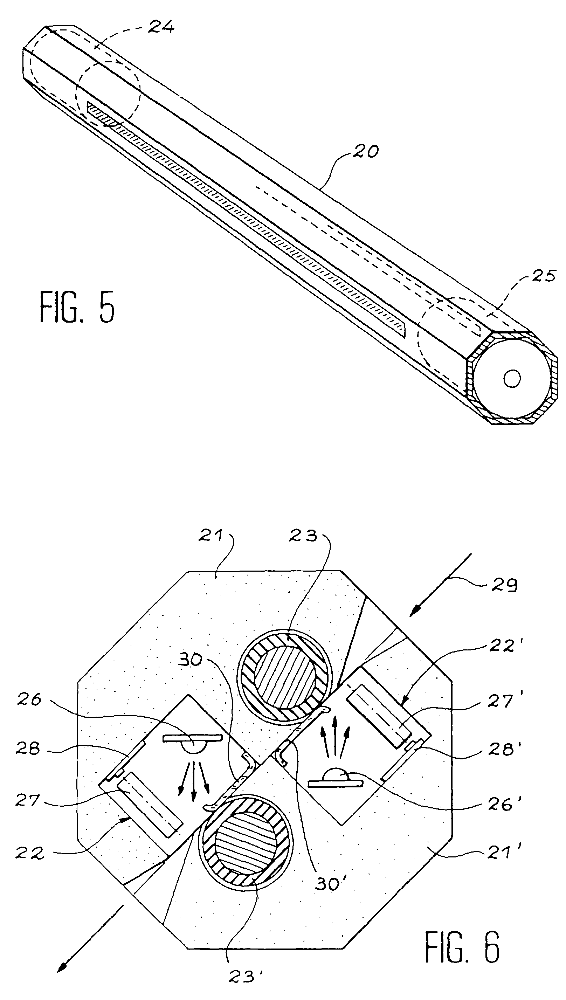

Comme représenté sur les figures 5 et 6, le boîtier 20 du scanner de l'invention est constitué de deux parties symétriques 21, 21' montées inversées l'une par rapport à l'autre pour former un ensemble allongé multifacette ou cylindrique.

Chaque partie 21, 21' contient notamment un capteur 22, 22' et un rouleau d'entraînement 23, 23'.

Un (ou les deux) moteur(s) d'entraînement 24 (25) est (sont) situé(s) par exemple dans le prolongement dudit scanner.

Chaque capteur comprend une série de diodes émettrices 26, 26' qui envoient de la lumière dans la direction de la surface contre laquelle doit défiler le document à lire (29), un moyen optique de focalisation 27, 27', et un capteur proprement dit 28, 28'.

Avantageusement le moyen optique de focalisation est formé d'un ensemble de tronçons de fibres optiques de même longueur, parallèles, fixées ensemble par de la résine, permettant la focalisation de l'image d'une ligne.

Les deux parties 21, 21' du boîtier peuvent être obtenues avantageusement à l'aide d'une filière. Elles contiennent tous les aménagements internes et externes nécessaires pour loger la mécanique et l'électronique nécessaire au fonctionnement du scanner.

Avantageusement une lame, par exemple ressort 30, 30', permet le déplacement du document à lire dans le scanner. Cette lame peut être mobile autour d'un axe 31.

Cette lame ressort est disposée en contact pour coopérer avec un rouleau d'entraînement sur la face supérieure du capteur, permettant à la fois par pression d'appliquer le document contre le rouleau, permettant notamment son entraînement et son défroissage, et à la fois de présenter ce document aux bons emplacements par rapport à l'axe optique du capteur.

Dans un mode de réalisation cette lame est formée par une surface transparente appliquée par pression en contact pour coopérer avec le rouleau grâce à un axe, la pression étant effectuée soit par un ressort procurant un couple à l'axe soit par un ressort exerçant une poussée contre cette surface.

Dans un autre mode de réalisation, cette lame est formée par une surface transparente appliquée grâce à un système élastique.

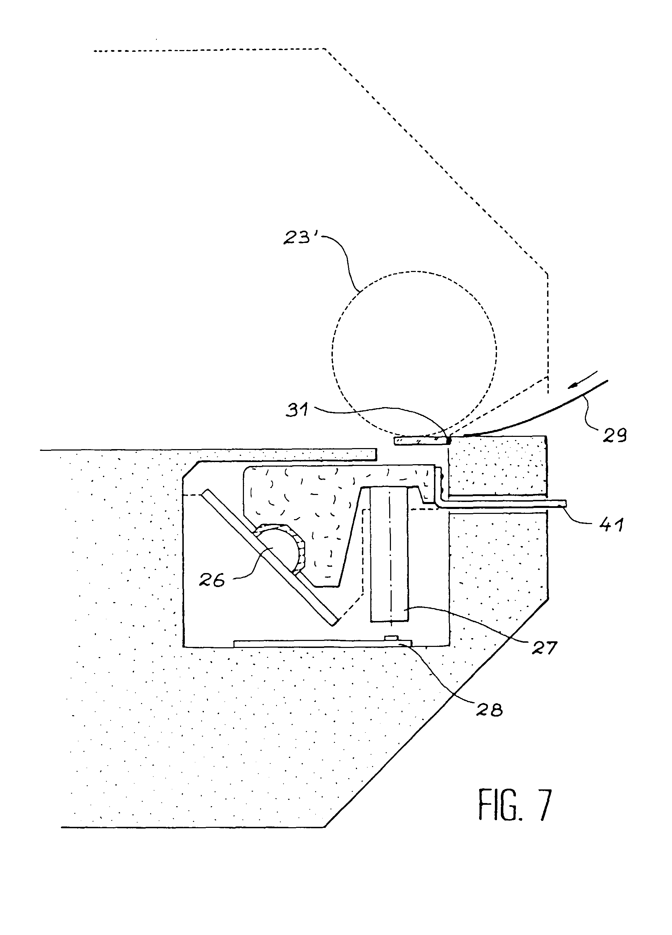

Comme représenté sur la figure 7, au moins un patin de nettoyage 40, auquel est fixé une lamelle 41, peut coulisser le long du scanner de manière à permettre un nettoyage des surfaces des diodes émettrices (26, 26') et des moyens optiques de focalisation (27, 27') sans nécessiter de démontage du boîtier du scanner.

Les capteurs utilisés dans l'exemple de réalisation sont de préférence des barres de pixels de type CIS (Contact Image Sensor) ou NCIS (Non Contact Image Sensor), comportant par exemple 3456 éléments, ce qui permet une résolution de 400 pixels par pouce (400 dpi; 1 pouce = 25,4 mm), mais tout autre type peut être utilisé, par exemple jusqu'à 1600 pixels par pouce. L'acquisition des pixels est effectuée par un convertisseur analogique/numérique ou CAN connecté directement à la sortie du capteur. Un circuit annexe CNA 72 lui permet de régler ses seuils bas et haut de conversion.

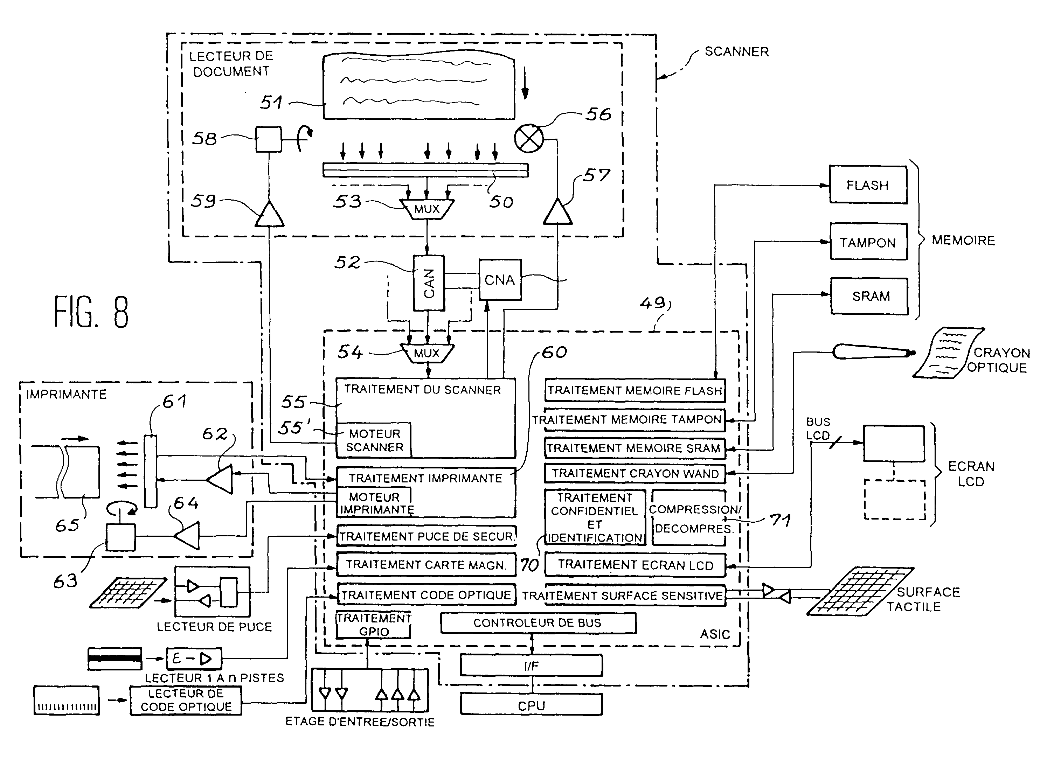

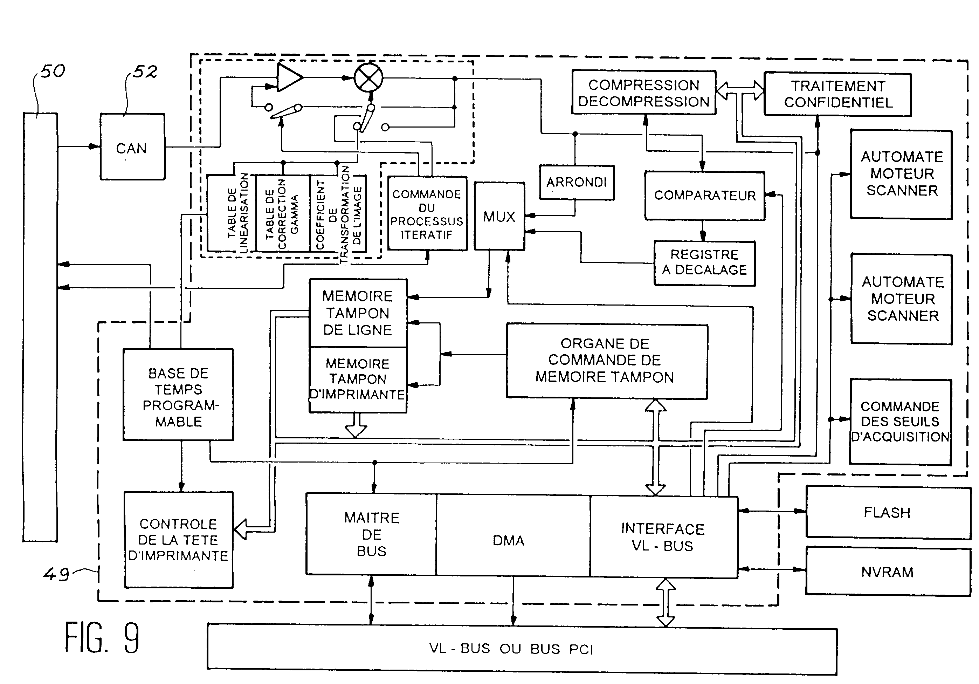

Comme représenté sur les figures 8 et 9 le circuit électrique du scanner selon l'invention comprend au moins un capteur 50 devant lequel défile le document à lire 51. Ce capteur est suivi d'un convertisseur analogique/numérique 52, au moins un multiplexeur étant disposé avant ce convertisseur (multiplexeur analogique 53) et/ou après ce convertisseur (multiplexeur numérique 54).

Le multiplexeur, s'il est numérique (54) peut être inclus dans le circuit ASIC 49.

Le rôle de ce multiplexeur est de permettre l'utilisation de plus d'un capteur.

Un module de traitement du scanner 55, partie de ce circuit ASIC, est relié à une source lumineuse 56 au travers d'un étage de sortie 57, et au moteur 58 d'avancement du document à lire au travers d'une étage de sortie 59.

Un module de traitement de l'imprimante 60 est relié à une tête d'impression 61 au travers d'un étage de sortie 62, et à un moteur 63 au travers d'un étage de sortie 64 de manière à imprimer un document 65.

Comme représenté sur la figure 8, différents autres modules du circuit ASIC sont reliés à un élément d'entrée-sortie correspondant.

Afin de mieux comprendre l'invention on va maintenant décrire le fonctionnement de scanner.

Le premier pixel d'une barre de pixels est converti puis est transmis vers le multiplieur où des opérations sont effectuées en utilisant une mémoire de coefficient associée à une mémoire tampon dans laquelle il est stocké.

Le pixel suivant est lui aussi converti puis des opérations lui sont aussi appliquée qui peuvent grâce au dispositif selon l'invention et notamment au multiplexeur être fonction, soit du pixel précédemment lu, soit d'une table de correction telle que définie plus haut soit des deux. La valeur stockée de ce deuxième pixel peut donc être une valeur très complexe dépendant de différents facteurs.

Le pixel suivant peut se voir appliqué les mêmes types d'opération que précédemment et ainsi de suite.

On voit bien que la valeur stockée d'un pixel peut être fonction des pixels situés dans son voisinage associé aux coefficients de correction cités plus haut. De plus on peut effectuer plusieurs fois une opération pour chaque pixel, la vitesse du multiplieur associé au sommateur et aux multiplexeurs étant plusieurs fois plus rapide que celle de lecture des pixels, ceci permettant notamment des opérations non linéaires.

Le stockage dans la mémoire tampon est effectué concomitamment avec les opérations nécessaires au traitement d'un pixel.

On note que dans le cas de traitements spécifiques à un groupe ou matrice de pixels, le premier pixel à traiter doit attendre que le nombre de pixels nécessaires à son traitement, par exemple par la matrice noyau, soit stocké. Dès que ce nombre est atteint, chaque nouveau pixel acquis est soumis à sa phase de traitement en temps réel.

Par exemple, si on tient compte de sept pixels pour effectuer le traitement d'un seul, on stocke les 6 premiers pixels après les avoir par exemple linéarisé, puis quand arrive le septième on peut effectuer les opérations sur le premier pixel reçu de la ligne et ainsi de suite pour le restant des pixels de la ligne. Les pixels ayant subi les diverses opérations sont ensuite stocké dans la mémoire tampon, avant d'être envoyé à l'unité centrale quand la fraction de ligne ou la ligne est complète.

Le cheminement du traitement d'un pixel est le suivant : Le pixel est envoyé vers un sommateur puis un multiplieur auquel sont connectés un interrupteur et un inverseur, commandés par un organe de commande.

Il subit les différentes opérations nécessaires à la linéarisation et à la correction puis au traitement numérique bi-dimensionnel grâce à la gestion des multiplexeurs qui permettent d'appliquer les informations correctes aux bons moments et notamment les tables de coefficients de linéarisation, de correction et de traitement de l'image servant à ces opérations et qui sont contenues dans la mémoire tampon dont l'accès est régi par le dit organe de commande.

Un autre multiplexeur permet de stocker les résultats intermédiaires et/ou finaux de ces opérations sur chaque pixel dans la mémoire tampon.

En outre, afin d'obtenir une palette de gris plus étendue dans le rendu de l'image stockée, le dispositif de traitement comporte un moyen permettant de retirer ou ajouter une information, par exemple du bruit, afin d'obtenir une palette de couleur plus étendue, par exemple par une méthode appelée "dithering", en temps réel. Le nombre des niveaux de couleur peut ainsi, pa exemple, passer de 256 à 1024 grâce à ce traitement.

En outre le dispositif selon l'invention peut interpoler des pixels et augmenter ainsi virtuellement la résolution du scanner, par exemple de passer de 400 à 600 dpi, en temps réel.

La base de temps permet d'envoyer des signaux de commande au capteur ainsi qu'à tous les organes décrits ci-dessus ce qui permet de synchroniser toutes les opérations effectuées par le dispositif de traitement.

Un autre dispositif, incorporé dans le système selon l'invention, est constitué d'un comparateur logique à fenêtre qui permet de comparer chaque pixel à une valeur prédéterminée dans une table selon un seuil haut et un seuil bas numériques afin de permettre ensuite d'effectuer des opérations selon le résultat obtenu. Ce comparateur intervient dans le dispositif de l'exemple à la fin des opérations de traitement, mais il peut également intervenir au cours des opérations auxquelles le pixel est soumis.

Il peut par exemple permettre de traiter les pixels reçus, une fois linéarisés, pour les convertir en deux niveaux et non plus 256 selon l'exemple cité, ces deux niveaux étant déterminés en fonction des seuils appliqués au comparateur.

Un autre dispositif selon l'invention permet de réaliser la compression des lignes scannées en temps réel. Ceci permet à la fois de gagner du temps lors du transfert, ainsi que l'espace mémoire nécessaire au stockage des images.

Un autre dispositif 70 permet de traiter confidentiellement des informations, ce dispositif peut aussi servir à crypter et/ou décrypter des informations. La gestion d'un tel scanner associée à cette fonction de confidentialité intégrée selon l'invention permet d'écrire et/ou de lire des signatures cryptées adjointes aux documents analysés.

Un registre à décalage permet de séquencer chaque pixel dans les opérations successives décrites.

L'ensemble du dispositif est pourvu d'un bus interne qui dans l'exemple décrit est d'une largeur de 32 bits et fonctionne à une fréquence de 70 mégaHertz.

Le scanner est prévue également pour être connectée à tout type de bus.

Selon un prototype réalisé de l'invention le dispositif de traitement du scanner possède une interface VL-bus qui comporte un contrôleur de bus ainsi qu'un contrôleur DMA afin de pouvoir gérer les transferts de données du scanner vers la mémoire avec un débit élevé.

Selon un autre prototype réalisé de l'invention le dispositif de traitement du scanner possède une interface bus-PCI qui comporte un contrôleur de bus ainsi qu'un contrôleur DMA (accès direct à la mémoire) afin de pouvoir gérer les transferts de données du scanner vers la mémoire avec un débit élevé.

Mais l'invention est prévue pour être connectée à tout type de bus.

L'ASIC réalisé selon l'invention permet la configuration dite Pn'P: "Plug and Play" de l'unité hôte, c'est-à-dire une configuration automatique.

## Revendications

**1.** Scanner de tout type de document comprenant au moins un capteur (28',50) composé de multiples éléments photosensibles pour lire une image, cette image étant formée par une pluralité de pixels ; un dispositif d'illumination (26',56), un système d'entraînement (23',30'), des dispositifs périphériques associés et au moins un dispositif (49) de traitement numérique pour effectuer le traitement numérique d'une image, la commande du système d'entraînement, et la commande des dispositifs périphériques ; caractérisé en ce que le dispositif de traitement numérique comprend au moins un circuit ASIC pour réaliser un traitement numérique en temps réel d'une image acquise, ledit circuit étant opérable à:

- soumettre les éléments d'un capteur, un à un, au calcul de leur courbe de réponse, chacune des courbes individuelles obtenues représentant la sensibilité en fonction du niveau de lumière reçu,
- déterminer et stocker dans une première phase, pour chacune desdites courbes individuelles, des coefficients de linéarisation individuelle de la sensibilité,
- déterminer et stocker dans une deuxième phase, pour chaque élément du capteur, des coefficients d'uniformisation, ladite détermination étant telle que tous les éléments du capteur, après leur linéarisation et uniformisation, possèdent exactement la même courbe de sensibilité,

- les coefficients d'uniformisation étant stockés mixés avec les coefficients de linéarisation individuels respectifs de façon que le nombre des coefficients stockés par élément soit inchangé,
- appliquer lesdits coefficients mixés aux données d'image au cours dudit traitement numérique en temps réel.

2. Scanner selon la revendication 1, caractérisé en ce que le dispositif de traitement des pixels des images acquises consiste en au moins un multiplieur coopérant avec au moins un sommateur et avec des multiplexeurs, ainsi qu'avec une mémoire tampon.

3. Scanner selon la revendication 1, caractérisé en ce qu'il comprend un dispositif de numérisation qui est un convertisseur analogique/numérique (52) de type « flash », ou « sub-ranging » ou « semi-flash ».

4. Scanner selon la revendication 1, caractérisé en ce que le dispositif de traitement est intégré dans un scanner de type classique.

5. Scanner selon la revendication 1, caractérisé en ce qu'une partie ou l'ensemble du traitement est intégré ou disposé conjointement avec le capteur dudit scanner.

6. Scanner selon la revendication 5, caractérisé en ce que la partie intégrée dans le capteur (50) est celle de traitement du scanner avec les gestions associés (52, 53, 54, 55, 72).

7. Scanner selon la revendication 1, caractérisé en ce qu'il comprend des moyens de connexion à une unité centrale, ou à tout type d'ordinateur.

8. Scanner selon la revendication 1, caractérisé en ce que le dispositif de traitement numérique comprend des moyens d'interfaçage dudit scanner avec des unités périphériques telles que notamment : au moins un écran LCD ou non LCD, et/ou au moins une imprimante thermique ou à jet d'encre ou autre, et/ou au moins une mémoire flash, et/ou au moins une mémoire non volatile de type statique ou pseudostatique, et/ou au moins une mémoire de type RAM dynamique, et/ou au moins un lecteur optique, et/ou au moins un lecteur magnétique, et/ou au moins une surface tactile, et/ou au moins un lecteur de puce, et/ou au moins un moyen entrées/sorties à usage général GPIO, et de les gérer.

9. Scanner selon la revendication 1, caractérisé en ce qu'il comprend un boîtier constitué de deux parties symétriques (21, 21') montées l'une sur l'autre et inversées l'une par rapport à l'autre pour former un ensemble allongé multifacette, ou cylindrique.

10. Scanner selon la revendication 1, caractérisé en ce qu'une lame ressort (30, 30') est disposée pour coopérer avec un rouleau (23, 23') sur une face de lecture du scanner, ladite lame permettant à la fois par pression d'appliquer le document contre le rouleau, permettant son entraînement et son défroissage, et à la fois de présenter ce document aux bons emplacements par rapport à l'axe optique du capteur.

11. Scanner selon la revendication 10, caractérisé en ce que ladite lame est formée par une surface transparente appliquée par pression en contact, pour coopérer avec le rouleau, grâce à un axe (31), la pression étant effectuée soit par un ressort procurant un couple à l'axe, soit par un ressort exerçant une poussée contre cette surface.

12. Scanner selon la revendications 10, caractérisé en ce que ladite lame est formée par une surface transparente appliquée en contact pour coopérer avec le rouleau grâce à un système élastique.

13. Scanner selon l'une quelconque des revendications 9 à 12, caractérisé en ce qu'il comprend au moins un patin de nettoyage (40) intégré, mobile, déplaçable le long d'une fenêtre de lecture, permettant de nettoyer le capteur, les sources lumineuses et/ou la surface transparente, sans démontage.

14. Procédé de traitement numérique pour commander un scanner de tout type de document comprenant au moins un capteur composé de multiples éléments photosensibles, un dispositif d'illumination, un système d'entraînement, des dispositifs périphériques associés et au moins un dispositif de traitement numérique pour effectuer le traitement numérique d'une image acquise, cette image comprenant une pluralité de pixels, ledit procédé comprenant les étapes suivantes :

- soumettre les éléments d'un capteur, un à un, au calcul de leur courbe de réponse, chacune des courbes obtenues individuelles représentant la sensibilité en fonction du niveau de lumière reçu,
- déterminer et stocker dans une première phase, pour chacune desdites courbes individuelles, des coefficients de linéarisation individuelle de la sensibilité,
- déterminer et stocker dans une deuxième phase, pour chaque élément du capteur, des coefficients d'uniformisation, ladite détermination étant telle que tous les éléments du capteur, après leur linéarisation et uniformisation, possèdent exactement la même courbe de sensibilité,

- les coefficients d'uniformisation étant stockés mixés avec les coefficients de linéarisation individuels respectifs de façon que le nombre des coefficients stockés par élément soit inchangé,

- appliquer lesdits coefficients mixés aux données d'image au cours dudit traitement numérique en temps réel.

15. Procédé selon la revendication 14, caractérisé en ce qu'on traite l'image en cours d'acquisition de toutes les manières souhaitées en même temps que les opérations de linéarisation et de l'uniformisation du capteur.

16. Procédé selon l'une quelconque des revendications 14 ou 15, caractérisé en ce qu'une relation est établie entre plusieurs pixels qui se traduit sous la forme d'opérations matricielles.

17. Procédé selon la revendication 16, caractérisé en ce que, de façon à traiter les pixels en temps réel par ordre d'arrivée, on utilise lesdits coefficients, et injecte dans un multiplieur ces différents coefficients, grâce à des multiplexeurs, le dispositif de traitement étant capable d'effectuer une pluralité d'opérations sur des pixels au fur et à mesure que les pixels sont acquis.

18. Procédé selon l'une quelconque des revendications 14 à 17, caractérisé en ce que pour réaliser des corrections spécifiques de l'image, on utilise des matrices à plusieurs dimensions.

19. Procédé selon l'une quelconque des revendications 14 à 18, caractérisé en ce que, pour déterminer lesdits coefficients, on utilise des méthodes adaptatives comme notamment les moindres carrés ou les gradients.

20. Procédé selon l'une quelconque des revendications 14 à 19, caractérisé en ce qu'on utilise des matrices de correction spécifique qui sont le Laplacien et/ou la matrice de Taylor.

21. Procédé selon la revendication 18, caractérisé en ce que la relation d'une matrice à n dimensions est transformée en n relations de matrice à une dimension.

22. Procédé selon la revendication 21, caractérisé en ce que le dispositif de traitement traite une partie de cette relation, et en ce qu'une unité centrale applique une partie ou le restant du traitement sur l'image en cours d'acquisition.

23. Procédé selon la revendication 14, caractérisé en ce que les pixels d'une image, ainsi acquise et traitée, sont envoyés vers une mémoire tampon du dispositif où ils sont stockés puis envoyés à une unité centrale par lots successifs, en vue de stocker l'image.

24. Procédé selon l'une quelconque des revendications 22 ou 23, caractérisé en ce que l'unité centrale effectue le traitement pendant un laps de temps mort restant entre les stockages de l'image.

25. Procédé selon l'une quelconque des revendications 14 à 24, caractérisé en ce qu'on effectue des changements de résolution en temps réel de la définition en nombre de points d'une image dans toutes les directions.

26. Procédé selon l'une quelconque des revendications 14 à 25, caractérisé en ce qu'on effectue des changements en temps réel du nombre de niveaux de couleurs.

27. Procédé selon l'une quelconque des revendications 14 à 26, caractérisé en ce qu'on effectue tout traitement numérique spécifique ou non sur les images en cours d'acquisition.

**Patentansprüche**

1. Abtaster von Dokumenten jeder Art mit wenigstens einem Sensor (28', 50), gebildet durch eine Vielzahl von Elementen zum Lesen eines Bildes, wobei dieses Bild durch eine Vielzahl von Pixeln gebildet wird, einer Beleuchtungsvorrichtung (26', 56), einem Antriebssystem (23', 30'), zugeordneten peripheren Vorrichtungen und wenigstens einer digitalen Verarbeitungsvorrichtung (49), um die digitale Verarbeitung eines Bildes durchzuführen, der Steuerung des Antriebssystems und der Steuerung der peripheren Vorrichtungen;
**dadurch gekennzeichnet**,
dass die digitale Verarbeitungsvorrichtung wenigstens eine ASIC-Schaltung umfaßt, um eine digitale Echtzeit-Verarbeitung eines erfaßten Bildes durchzuführen, wobei die genannte Schaltung fähig ist:

- die Elemente eines Sensors einzeln der Berechnung ihrer Kennlinie auszusetzen, wobei jede der erhaltenen individuellen Kennlinien die Empfindlichkeit in Abhängigkeit von dem Niveau bzw. Pegel des empfangenen Lichts darstellt,

- in einer ersten Phase für jede der genannten individuellen Kennlinien individuelle Linearisierungskoeffizienten der Empfindlichkeit festzulegen und abzuspeichern,

- in einer zweiten Phase für jedes Element des Sensors Vereinheitlichungskoeffizienten festzulegen und abzuspeichern, wobei die genannte Festlegung derart ist, dass alle Elemente des Sensors nach ihrer Linearisierung und Vereinheitlichung genau dieselbe Empfindlichkeitskurve besitzen,
- wobei die Vereinheitlichungskoeffizienten mit den jeweiligen individuellen Linearisierungskoeffizienten gemischt werden, so dass die Anzahl der pro Element abgespeicherten Koeffizienten unverändert bleibt,
- die genannten gemischten Koeffizienten im Laufe der genannten digitalen Echtzeit-Verarbeitung auf die Bilddaten anzuwenden.

2. Abtaster nach Anspruch 1, dadurch gekennzeichnet, dass die Verarbeitungsvorrichtung der Pixel der erfaßten Bilder durch wenigstens einen Multiplizierer gebildet wird, der mit wenigstens einem Summierer und mit Multiplexern sowie mit einem Pufferspeicher zusammenwirkt.

3. Abtaster nach Anspruch 1, dadurch gekennzeichnet, dass er eine Digitalisierungsvorrichtung umfaßt, die ein Analog-Digital-Umsetzer (52) des "Flash"- oder "Subranging"- oder "Semi-flash"-Typs ist.

4. Abtaster nach Anspruch 1, dadurch gekennzeichnet, dass die Verarbeitungsvorrichtung in einen Abtaster des klassischen Typs integriert ist.

5. Abtaster nach Anspruch 1, dadurch gekennzeichnet, dass ein Teil oder die Gesamtheit der Verarbeitung integriert ist oder gemeinsam mit dem Sensor des genannten Abtasters angeordnet ist.

6. Abtaster nach Anspruch 5, dadurch gekennzeichnet, dass der in den Sensor (50) integrierte Teil der der Verarbeitung des Abtasters ist, mit den zugeordneten Steuerungen (52, 53, 54, 55, 72).

7. Abtaster nach Anspruch 1, dadurch gekennzeichnet, dass er Anschlußeinrichtungen an eine Zentraleinheit oder irgendeinen Computertyp umfaßt.

8. Abtaster nach Anspruch 1, dadurch gekennzeichnet, dass die digitale Verarbeitungsvorrichtung Interfacing-Einrichtungen des genannten Abtasters mit peripheren Einheiten umfaßt, z.B. insbesondere wenigstens einen LCD- oder Nicht-LCD-Bildschirm, und/oder wenigstens einen Thermo-, Tintenstrahl- oder anderen Drucker, und/oder wenigstens einen Flash-Speicher, und/oder wenigstens einen nichtflüchtigen Speicher des statischen oder pseudostatischen Typs, und/oder wenigstens einen dynamischen RAM, und/oder wenigstens einen optischen Leser, und/oder wenigstens einen magnetischen Leser, und/oder wenigstens eine Berührungsoberfläche, und/oder wenigstens einen Chipleser, und/oder wenigstens eine Eingänge-Ausgänge-Einrichtung GIPO zum generellen Gebrauch und um sie zu steuern.

9. Abtaster nach Anspruch 1, dadurch gekennzeichnet, dass er ein Gehäuse umfaßt, das durch zwei symmetrische Teile (21, 21') gebildet wird, die aufeinander montiert sind, verkehrt zueinander, um eine längliche Einheit zu bilden, mit einer Vielzahl Facetten oder zylindrisch.

10. Abtaster nach Anspruch 1, dadurch gekennzeichnet, dass eine Federlamelle (30, 30') angeordnet ist, um auf einer Lesefläche des Abtasters mit eine Walze (23, 23') zusammenzuwirken, wobei die genannte Lamelle durch Druck ermöglicht, das Dokument gegen die Walze zu pressen, was seinen Antrieb und seine Glättung bewirkt und es gleichzeitig richtig positioniert in bezug auf die optische Achse des Sensors.

11. Abtaster nach Anspruch 10, dadurch gekennzeichnet, dass die genannte Lamelle durch eine transparente Fläche gebildet wird, die mittels Druck dank einer Achse 31 gegen die Walze gepreßt wird, um mit ihr zusammenzuwirken, wobei der Druck entweder durch eine Feder geliefert wird, die ein Moment auf die Achse ausübt, oder durch eine Feder, die einen Druck auf diese Fläche ausübt.

12. Abtaster nach Anspruch 10, dadurch gekennzeichnet, dass die genannte Lamelle durch eine transparente Fläche gebildet wird, die dank eines elastischen Systems gegen die Walze gepreßt wird, um mit ihr zusammenzuwirken.

13. Abtaster nach einem der Ansprüche 9 bis 12, dadurch gekennzeichnet, dass er wenigstens ein integriertes mobiles Reinigungselement (40) umfaßt, verschiebbar längs eines Lesefensters, das ermöglicht, den Sensor, die Lichtquellen und/oder die transparente Fläche ohne Demontage zu reinigen.

14. Digitalverarbeitungsverfahren zur Steuerung eines Abtasters von Dokumenten jeder Art mit wenigstens einem Sensor, gebildet durch eine Vielzahl lichtempfindlicher Elemente, einer Beleuchtungsvorrichtung, einem Antriebssystem, zugeordneten peripheren Vorrichtungen und wenigstens einer digitalen Verarbeitungsvorrichtung, um die digitale Verarbeitung eines Bildes durchzuführen, wobei das genannte Bild eine Vielzahl von Pixeln aufweist und das Verfahren die folgenden Schritte umfaßt:

- man setzt die Elemente eines Sensors einzeln der Berechnung ihrer Kennlinie aus, wobei jede der erhaltenen individuellen Kennlinien die Empfindlichkeit in Abhängigkeit von dem Niveau bzw. Pegel des empfangenen Lichts darstellt,

- in einer ersten Phase legt man für jede der genannten individuellen Kennlinien individuelle Linearisierungskoeffizienten der Empfindlichkeit fest und speichert sie ab,

- in einer zweiten Phase legt man für jedes Element des Sensors Vereinheitlichungskoeffizienten fest und speichert sie ab, wobei die genannte Festlegung derart ist, dass alle Elemente des Sensors nach ihrer Linearisierung und Vereinheitlichung genau dieselbe Empfindlichkeitskurve besitzen,

- wobei die Vereinheitlichungskoeffizienten mit den jeweiligen individuellen Linearisierungskoeffizienten gemischt werden, so dass die Anzahl der pro Element abgespeicherten Koeffizienten unverändert bleibt bzw. sich nicht ändert,

- man wendet die genannten gemischten Koeffizienten im Laufe der genannten digitalen Echtzeit-Verarbeitung auf die Bilddaten an.

15. Verfahren nach Anspruch 14, dadurch gekennzeichnet, dass man das Bild im Laufe der Erfassung nach allen erwünschten Arten verarbeitet, gleichzeitig mit den Linearisierungs- und Vereinheitlichungsoperationen des Sensors.

16. Verfahren nach einem der Ansprüche 14 oder 15, dadurch gekennzeichnet, dass eine Beziehung zwischen mehreren Pixeln hergestellt wird, die sich in Form matrizieller Operationen ausdrückt.

17. Verfahren nach Anspruch 16, dadurch gekennzeichnet, dass man, um die Pixel in Echtzeit entsprechend der Ankunftsreihenfolge zu verarbeiten, die genannten Koeffizienten benutzt und diese verschiedenen Koeffizienten dank Multiplexern in einen Multiplizierer einspeist, wobei die Verarbeitungsvorrichtung fähig ist, in dem Maße, wie die Pixel erfaßt werden, an diesen Pixeln eine Vielzahl von Operationen durchzuführen.

18. Verfahren nach einem der Ansprüche 14 bis 17, dadurch gekennzeichnet, dass man zum Durchführen spezifischer Korrekturen des Bildes Matrizen mit mehreren Dimensionen verwendet.

19. Verfahren nach einem der Ansprüche 14 bis 18, dadurch gekennzeichnet, dass man zum Festlegen der genannten Koeffizienten adaptive Methoden wie insbesondere die kleineren Quadrate oder die Gradienten benutzt.

20. Verfahren nach einem der Ansprüche 14 bis 19, dadurch gekennzeichnet, dass man spezifische Korrekturmatrizen benutzt, nämlich die Laplacesche und/oder die Taylor-Matrix.

21. Verfahren nach Anspruch 18, dadurch gekennzeichnet, dass die Relation einer Matrix mit n Dimensionen in n Relationen einer Matrix mit einer Dimension übertragen wird.

22. Verfahren nach Anspruch 21, dadurch gekennzeichnet, dass die Verarbeitungsvorrichtung einen Teil dieser Relation verarbeitet, und dadurch, dass eine Zentraleinheit einen Teil oder den Rest der Verarbeitung auf das Bild anwendet, das gerade erfaßt wird.

23. Verfahren nach Anspruch 14, dadurch gekennzeichnet, dass die Pixel eines derart erfaßten und verarbeiteten Bildes an einen Pufferspeicher der Vorrichtung gesandt werden, wo sie gespeichert und dann hinsichtlich der Speicherung des Bildes nacheinander gruppenweise an eine Zentraleinheit gesandt werden,

24. Verfahren nach einem der Ansprüche 22 oder 23, dadurch gekennzeichnet, dass die Zentraleinheit die Verarbeitung während einer zwischen den Bildspeicherungen verbleibenden Leerlaufzeit durchführt.

25. Verfahren nach einem der Ansprüche 14 bis 24, dadurch gekennzeichnet, dass man Echtzeit-Auflösungsveränderungen bei der Definition der Anzahl der Punkte eines Bildes in allen Richtungen durchführt.

26. Verfahren nach einem der Ansprüche 14 bis 25, dadurch gekennzeichnet, dass man Echtzeit-Veränderungen der Anzahl der Farbpegel durchführt.

27. Verfahren nach einem der Ansprüche 14 bis 26, dadurch gekennzeichnet, dass man jede digitale Verarbeitung an den Bildern, spezifisch oder nicht, im Laufe der Erfassung durchführt.

**Claims**

1. Scanner for any type of document having at least one photosensitive sensor (28, 50) formed from multiple elements in order to read an image, said image being formed by a plurality of pixels, an illumination device (26, 56), a drive system (28', 30'), peripheral devices associated therewith and at least one digital processing device (49) for the digital processing of an image, the control of the drive system and the control of the peripheral devices, characterized in that the digital processing device comprises at least one ASIC circuit for carrying out a real time digital processing of an acquired image, said circuit being able to:

- subject the elements of a sensor, one by one, to the calculation of their response curve, each of the individual curves obtained representing the sensitivity as a function of the received light level,
- determine and store in a first phase for each of said individual curves, individual sensitivity linearization coefficients,
- determine and store in a second phase for each element of the sensor, uniformization coefficients, said determination being such that all the elements of the sensor, following their linearization and uniformization, have precisely the same sensitivity curve,
- the uniformization coefficients being stored in mixed form with the respective individual linearization coefficients so that the number of coefficients stored per element is unchanged,
- apply said mixed coefficients to the image data during said real time digital processing.

2. Scanner according to claim 1, characterized in that the processing device of the pixels of the acquired images consists of at least one multiplier cooperating with at least one adder and with multiplexers, as well as with a buffer store.

3. Scanner according to claim 1, characterized in that it comprises a digitizing device, which is a flash or sub-ranging or semi-flash-type analog-digital converter (52).

4. Scanner according to claim 1, characterized in that the processing device is integrated into a conventional scanner.

5. Scanner according to claim 1, characterized in that the processing assembly or part is integrated or arranged jointly with the sensor of the scanner.

6. Scanner according to claim 5, characterized in that the integrated part in the scanner (50) is that for the processing of the scanner with the associated controls (52, 53, 54, 55, 72).

7. Scanner according to claim 1, characterized in that said device can be connected to a central processing unit or any type of computer.

8. Scanner according to claim 1, characterized in that the device also permits the interfacing of said scanner with peripherals such as e.g. at least one LCD or non-LCD screen and/or at least one thermal, ink jet or other printer, and/or at least one flash memory, and/or at least one nonvolatile, static or pseudostatic memory, and/or at least one dynamic RAM, and/or at least one optical reader, and/or at least one magnetic reader, and/or at least one tactile surface, and/or at least one chip reader and/or at least one general use input/output means GPIO, as well as to control the same.

9. Scanner according to claim 1, characterized in that it comprises a case constituted by symmetrical parts (21, 21'), which are superimposed and connected in reverse manner with respect to one another to form an elongated, multifacet or cylindrical assembly.

10. Scanner according to claim 1, characterized in that a spring plate (30, 30') is provided for cooperating with a roller on one reading face of the scanner, said plate permitting both by pressure the application of the document to the roller, so that it can be driven and uncreased, and also presents said document at the correct locations with respect to the optical axis of the sensor.

11. Scanner according to claim 10, characterized in that said plate is formed by a transparent surface applied by pressure in contact, to cooperate with the roller by means of a spindle (31), the pressure being provided either by a spring giving the spindle a torque, or by a spring exerting a thrust on said surface.

12. Scanner according to claim 10, characterized in that said plate is formed by a transparent surface applied in contact to cooperate with the roller by an elastic system.

13. Scanner according to any one of the claims 9 to 12, characterized in that it comprises at least one mobile, integrated, cleaning pad (40), displaceable along a reading window permitting the cleaning of the sensor, the light sources and/or the transparent surface without disassembly being necessary.

14. Digital processing process for controlling a scanner for any type of document comprising at least one sensor constituted by multiple photosensitive elements, an illumination device, a drive system, associated peripheral devices and at least one digital processing device for effecting the digital processing of an acquired image, said image comprising a plurality of pixels, said process comprising the following stages:

- subject the elements of a sensor, one by one, to the calculation of their response curve, each of the individual curves obtained representing the sensitivity as a function of the received light level,

- determine and store in a first phase for each of said individual curves, individually sensitivity linearization coefficients,

- determine and store in a second phase for each element of the sensor, uniformization coefficients, said determination being such that all the elements of the sensor, following their linearization and uniformization, have precisely the same sensitivity curve,

- the uniformization coefficients being stored in mixed form with the respective individual linearization coefficients so that the number of coefficients stored per element is unchanged,

- apply said mixing coefficients to the image data during said real time digital processing.

15. Process according to claim 14, characterized in that the image being acquired is processed in all desired ways at the same time as the linearization and uniformization operations of the sensor.

16. Process according to either of the claims 14 and 15, characterized in that a relationship is established between several pixels translated in the form of matrix operations.

17. Process according to claim 16, characterized in that so as to process the pixels in real time by the order of arrival, the processing device of the acquired pixels uses said coefficients and injects into the multiplier said different coefficients by means of multiplexers, the device being able to perform a plurality of operations on the pixels as the latter are acquired and consequently in real time.

18. Process according to any one of the claims 14 to 17, characterized in that for performing the specific corrections of the image, the device uses multidimensional matrixes.

19. Process according to any one of the claims 14 to 18, characterized in that, for determining said coefficients, the device uses adaptive methods such as in particular least squares or gradients.

20. Process according to any one of the claims 14 to 19, characterized in that the device uses specific correction matrixes, namely the Laplace and/or Taylor matrix.

21. Process according to claim 18, characterized in that the relation of a matrix with n dimensions is transformed into n unidimensional matrix relations.

22. Process according to claim 21, characterized in that the processing device processes part of said relation and in that a central unit applies a part or the remainder of the processing to the image during acquisition.

23. Process according to claim 14, characterized in that the pixels of a thus acquired and processed image are supplied to a buffer store of the device, where they are stored and then supplied to a central unit in successive batches for storing the image.

24. Process according to either of the claims 22 or 23, characterized in that the central unit performs the processing during a dead time remaining between the image storages.

25. Process according to any one of the claims 14 to 24, characterized in that real time resolution changes of the definition takes place at a number of points of an image in all directions.

26. Process according to any one of the claims 14 to 25, characterized in that there are real time changes of the number of colour levels.

27. Process according to any one of the claims 14 to 26, characterized in that it is possible to perform any specific or non-specific, digital processing of the images during acquisition.

FIG.1A

FIG.1B

FIG. 2

NOMBRE
DE PIXELS

0          255   INTENSITE

FIG. 3A

NOMBRE
DE PIXELS

0          255   INTENSITE

FIG. 3B

NOMBRE
DE PIXELS

0          255   INTENSITE

FIG. 3C

NOMBRE
DE PIXELS .

0                                              255   INTENSITE

# FIG. 4 A

NOMBRE
DE PIXELS

0                                              255   INTENSITE

# FIG. 4 B

FIG. 5

FIG. 6

FIG. 7

FIG. 8

FIG. 9